# EUROPEAN PATENT APPLICATION

(11) **EP 3 273 394 A1**
(43) Date of publication of application: **24.01.2018**
(21) Application number: 17182155.6
(22) Date of filing: 19.07.2017
(51) Int. Cl.: G06Q 10/08

(54) **PACKAGE INSPECTION SYSTEM AND PACKAGE INSPECTION PROGRAM**

(30) Priority: 20.07.2016 JP 2016142765
(71) Applicant: Kabushiki Kaisha Toshiba, Minato-ku Tokyo 105-8001 (JP)
(72) Inventor: USAMI, Yusuke, Minato-ku, Tokyo 105-8001 (JP)
(74) Representative: Horn Kleimann Waitzhofer Patentanwälte PartG mbB

(57) **Abstract**

A package inspection system includes a data management portion and an alert portion. The data management portion generates and manages a data table in which identification information regarding a package is associated with recognized information regarding the package, based on first recognized information, which includes at least the identification information regarding the package that is the result of image recognition performed on an image, and contents information indicating a sender of the package and contents of the package, and on second recognized information that is input regarding the package image to any of one or more terminal apparatuses to which the package image captured by the image capture portion has been sent. The data management unit then stores, in the data table, the result of inspection performed on the package. The alert portion extracts any sender of the package whose contents do not match the contents information indicating the contents of the package that is associated with the identification information in the data table, accumulates an extraction history, and causes an output portion to output information regarding any sender for whom the number of times or frequency that the contents information indicating the contents of the package did not matched the contents of the package has exceeded a predetermined threshold value.

## Description

### FIELD

Embodiments of the present invention relate to a package inspection system and a package inspection program.

### BACKGROUND

There are cases where the contents of packages are inspected at facilities through which the package passes, such as logistics warehouses and customs. In a system used in such facilities, first, an image of a package is captured by a camera, and information (sender, destination, contents etc.) stated on a form is acquired through OCR (Optical Character Recognition), or by human eyes. Then, an inspection image (e.g. X-ray radiographic image) of the package is also acquired, and whether or not the acquired inspection image matches the information stated on the form is determined. With conventional techniques, the results of this determination or the like are not appropriately fed back.

### BRIEF DESCRIPTION OF THE DRAWINGS

Fig. 1 is a schematic diagram of a classification system 1, which includes a package inspection system.
Fig. 2 depicts a functional configuration of a sorting management apparatus 100.
Fig. 3 depicts an example of information registered as package information 124.
Fig. 4 depicts a functional configuration of an inspection management apparatus 150.
Fig. 5 conceptually depicts processing executed by the package inspection system.
Fig. 6 is a flowchart illustrating a flow of processing executed by the sorting management apparatus 100.
Fig. 7 is a flowchart illustrating a flow of processing executed by the inspection management apparatus 150.
Fig. 8 depicts an example of an image IM displayed on a display portion of an inspection/determination terminal apparatus 200.
Fig. 9 depicts an example of an image that is displayed on a display portion of an unpacking inspection terminal apparatus 22 and indicates the result of processing performed by a statistics portion 162.
Fig. 10 is a configuration diagram of a classification system 1A, which includes a package inspection system.
Fig. 11 is a flowchart illustrating a flow of processing executed by a sorting management apparatus 100 according to a second embodiment.
Fig. 12 is a configuration diagram of an inspection unit 10A according to a third embodiment.
Fig. 13 depicts a functional configuration of an inspection management apparatus 150B according to the third embodiment.
Fig. 14 is a flowchart illustrating a flow of processing executed by an inspection management apparatus 150B according to the third embodiment.

### DETAILED DESCRIPTION

A package inspection system according to the embodiments includes a data management portion and an alert portion (warning portion). The data management portion generates and manages a data table in which identification information regarding a package is associated with recognized information regarding the package, based on recognized information, which includes at least the identification information regarding the package that is the result of image recognition performed on an image of the package captured by an image capture portion, and contents information indicating a sender of the package and contents of the package, and on recognized information regarding the package that is input regarding the package image to any of one or more terminal apparatuses to which the package image captured by the image capture portion has been sent. The data management unit then stores, in the data table, the result of inspection performed on the package. The alert portion extracts any sender of the package whose contents do not match the contents information indicating the contents of the package that is associated with the identification information in the data table, accumulates an extraction history, and causes an output portion to output information regarding any sender for whom the number of times or frequency that the contents information indicating the contents of the package did not matched the contents of the package has exceeded a predetermined threshold value.

Hereinafter, the package inspection system and a package inspection program according to the embodiments will be described with reference to the drawings. The package inspection system is a system that assists in those who engage in inspection (inspectors, operators etc.) when packages are inspected. The package inspection system according to the embodiments will be described as one provided at customs.

### First Embodiment

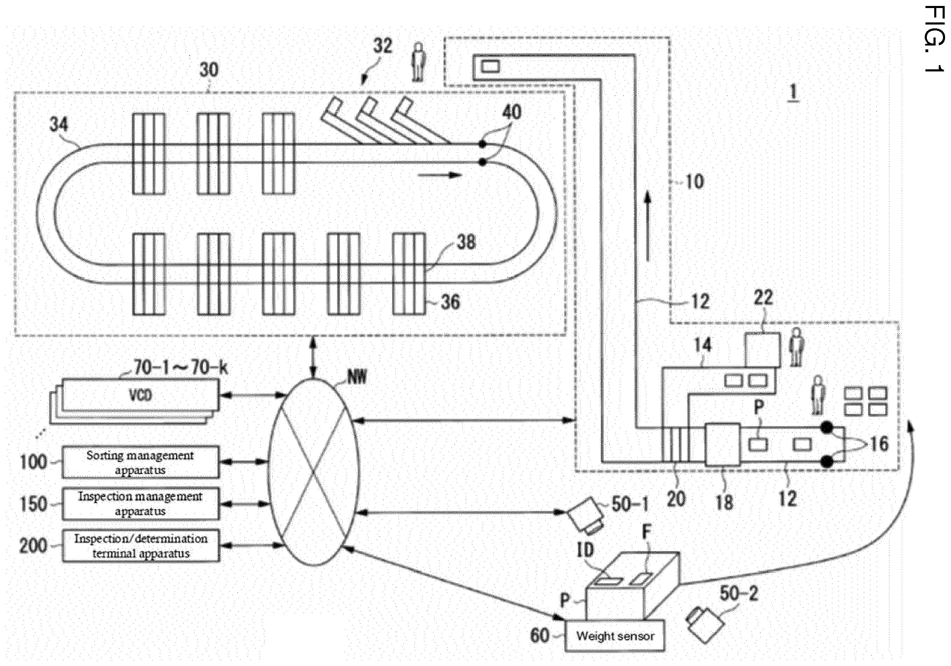

Fig. 1 is a configuration diagram of a classification system 1, which includes a package inspection system.

The classification system includes, for example, an inspection unit 10, a sorting unit 30, two or more cameras 50-1 and 50-2, a weight sensor 60, one or more VCDs 70-1 to 70-k (k is any natural number), a sorting management apparatus 100, an inspection management apparatus 150, and an inspection/determination terminal apparatus 200.

A combination of the sorting management apparatus 100 and the inspection management apparatus 150 is an example of the package inspection system. Hereinafter, when the cameras 50-1 and 50-2 are not distinguished from each other, they will be simply called camera(s) 50. When the VCDs 70-1 to 70-k are not distinguished from one another, they will be simply called VCD(s) 70. Each camera 50 is an example of an image capture portion. The inspection/determination terminal apparatus 200 is an example of an output portion.

The inspection unit 10, the sorting unit 30, the cameras 50, the weight sensor 60, the VCDs 70, the sorting management apparatus 100, the inspection management apparatus 150, and the inspection/determination terminal apparatus 200 communicate with one another via a network NW, such as a LAN (Local Area Network), a WAN (Wide Area Network), a cellular communication network, or the Internet.

An image of a package P is captured by the cameras 50, and the weight of the package P is measured by the weight sensor 60. Thereafter, the package P is carried to the inspection unit 10, and is inspected in the inspection unit 10. Next, the package P is carried to the sorting unit 30, and is sorted in accordance with its destination.

First, the cameras 50 and the weight sensor 60 will be described. The cameras 50 each capture an image of the package P, and transmit, to the sorting management apparatus 100, the captured image (first image) and the time when the image was captured in association with each other. Although two cameras 50 are shown in Fig. 1, six cameras 50 may be arranged, and the six cameras 50 may acquire images of respective faces of the package P, for example. In this case, one of the cameras 50 captures an image of a bottom face of the package P from a gap in a table or a mechanism on which the package P is put.

The weight sensor 60 measures the weight of the package P and transmits the measurement result to the sorting management apparatus 100.

There is no particular limitation to the places where the cameras 50 and the weight sensor 60 are arranged. However, for example, the cameras 50 are provided at positions where they can capture images of the package P that is located at a predetermined place, and the weight sensor 60 is provided at a position where it can measure the weight of the package P that is located at the predetermined place. Upon an operator operating a predetermined button, the cameras 50 capture the images of the package P, and the weight sensor 60 measures the weight of the package P. After the images of the package P have been captured by the cameras 50 and the weight of the package P has been measured by the weight sensor 60, this package P is carried to the inspection unit 10.

The inspection unit 10 includes, for example, a main conveyance portion 12, an unpacking inspection conveyance portion 14, a code reader unit 16, a radiographic apparatus 18, a branching mechanism 20, and an unpacking inspection terminal apparatus 22. The main conveyance portion 12 conveys each package to an area near an insertion portion 32 of the sorting unit 30. The main conveyance portion 12 includes a conveyor belt, a drive pulley, and a drive motor, for example. The drive pulley is rotated due to a driving force that is transmitted by driving of the drive motor. The conveyor belt is driven by the rotational force of the drive pulley to convey the package P. The drive motor controls a conveying force that is exerted on the conveyor belt, based on the control by the inspection management apparatus 150. The code reader unit 16 is an example of an identification information acquisition portion.

In the main conveyance portion 12, the code reader unit 16, the radiographic apparatus 18, and the branching mechanism 20 are provided in this order from the upstream side relative to the flow of the package P. In addition, in the main conveyance portion 12, a plurality of detection sensors (not shown) for detecting the package P are provided at predetermined intervals. The detection sensors are implemented with an infrared sensor, a photosensor, or the like, for example. The code reader unit 16 includes a code reading portion for reading a barcode and a QR code (registered trademark), an operation portion for accepting an input operation made by a user, a display portion for displaying information, a network communication portion for connecting to the network NW, and so forth.

For example, the code reading portion irradiates a barcode and a QR code with light, and receives reflected light of the light with which the barcode and QR code are irradiated. The code reading portion converts the light-receiving result into electronic information. The operation portion is a user interface, such as a button, a keyboard, a mouse, a microphone, or a touch panel. The display portion includes a display device, such as an LCD (Liquid Crystal Display) or an organic EL (Electroluminescence) display.

The code reader unit 16 may include an information output portion, such as a speaker for outputting sound or a light for indicating information by turning on or off, instead of or in addition to the display portion. The display portion, speaker, or light is another example of the output portion. Note that such an output portion may be separate from the code reader unit 16. One of or both the operation portion and display portion may be omitted from the code reader unit 16.

The unpacking inspection conveyance portion 14 is joined to the main conveyance portion 12 and the branching mechanism 20. The unpacking inspection conveyance portion 14 conveys a package that needs to be inspected to a predetermined area, based on the control by the inspection management apparatus 150.

The radiographic apparatus 18 is an apparatus for obtaining a radiographic image of each package. The radiographic apparatus 18 includes, for example, a detection portion, an irradiation portion, and a conversion processing portion. The detection portion is implemented with an infrared sensor or a photosensor, for example, and detects that the package P is located at a target position. The target position is an area that is to be irradiated with radiation by the irradiation portion. The irradiation portion irradiates an inspection target (package P) with permeable radiation (e.g. X-rays). The conversion processing portion includes an image intensifier, for example. The conversion processing portion detects X-rays that have been transmitted through the inspection target, amplifies the intensity of the detected X-rays, and generates a visible light image based on the amplified X-rays. The conversion processing portion transmits, to the inspection management apparatus 150 and the like, a radiographic image (hereinafter, second image), which includes the generated visible light image, in association with the time when the image was generated.

The branching mechanism 20 is provided at a place where the main conveyance portion 12 and the unpacking inspection conveyance portion 14 are joined to each other. The branching mechanism 20 conveys the package P that has passed through the radiographic apparatus 18 and needs to be subjected to visual inspection, to the unpacking inspection conveyance portion 14. The package P that has been carried to the unpacking inspection conveyance portion 14 is unpacked by an inspector. The inspector inspects the unpacked package P, and makes an operation to input the inspection result to the operation portion of the unpacking inspection terminal apparatus 22, for example. The unpacking inspection terminal apparatus 22 transmits the input inspection result to the sorting management apparatus 100 and the like via the network NW. The unpacking inspection terminal apparatus 22 is another example of the output portion.

The sorting unit 30 includes, for example, an insertion portion 32, a circular conveyance portion 34, a plurality of chutes (classifying portions) 36, a plurality of branching mechanisms 38, and a code reader unit 40. The insertion portion 32 is joined to the circular conveyance portion 34. The insertion portion 32 conveys the package P that has been inserted by the operator to the circular conveyance portion 34. The insertion portion 32 includes a conveyor belt, which is driven in the direction moving toward the circular conveyance portion 34. As a result of this conveyor belt being driven, the inserted package P is conveyed to the circular conveyance portion 34.

The circular conveyance portion 34 forms a circular passage, and conveys the package P through the passage. The circular conveyance portion 34 includes, for example, a conveyor belt, a drive pulley, and a drive motor. The plurality of chutes 36 are joined to the circular passage of the circular conveyance portion 34. Each chute 36 has a gradient with which the package P slides down from the circular conveyance portion 34 toward an area (not shown) for accumulating packages P. The branching mechanisms 38 are provided at points where the circular conveyance portion 34 is joined to the chutes 36. The branching mechanisms 38 convey packages P to corresponding chutes 36 based on the control by the sorting management apparatus 100. Note that the circular conveyance portion 34 may have a configuration in which each package P is placed on a seat and conveyed one-by-one, and is conveyed toward a corresponding chute 36 as a result of a belt provided on the seat rotating in the direction moving toward the chute 36.

The branching mechanisms 38 each include a conveyor belt, which is driven in the direction moving toward the chutes 36. As a result of this conveyor belt being driven, the package P that is present on the circular conveyance portion 34 is carried out to the corresponding chute 36. The package P that has been carried to the corresponding chute 36 by the branching mechanism 38 slides down on the gradient of the chute 36, and thus moves toward the accumulation area. The package P that has slid down on the chute 36 is temporarily placed in the accumulation area. The operator conveys the temporarily placed package P in accordance with the destination to which the package P is to be conveyed.

The code reader 40 is provided between the insertion portion 32 and the branching mechanism 38 that is first reached by the package P that has been conveyed from the insertion portion 32 to the circular conveyance portion 34. The code reader 40 includes a code reading portion for reading a barcode and a QR code, a network communication portion for connecting to the network NW, and so forth. The code reader 40 transmits information read by the code reading portion to the sorting management apparatus 100.

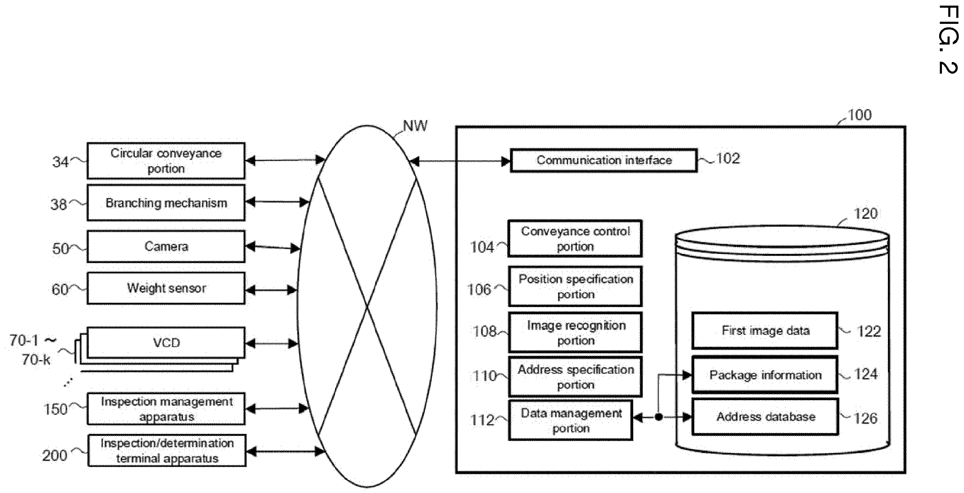

Fig. 2 depicts a functional configuration of the sorting management apparatus 100. The sorting management apparatus 100 includes, for example, a communication interface 102, a conveyance control portion 104, a position specification portion 106, an image recognition portion 108, an address specification portion 110, a data management portion 112, and a storage portion 120.

Some or all of the conveyance control portion 104, the position specification portion 106, the image recognition portion 108, the address specification portion 110, and the data management portion 112 may be implemented as a result of a processor, such as a CPU (Central Processing Unit), executing a program. Some or all of these functional portions may be implemented by hardware, such as an LSI (Large Scale Integration), an ASIC (Application Specific Integrated Circuit), or an FPGA (Field-Programmable Gate Array). The storage portion 120 is implemented by a storage device, such as a RAM (Random Access Memory), a ROM (Read Only Memory), a HDD (Hard Disk Drive), or a flash memory.

The communication interface 102 is connected to the network NW, and communicates with devices, apparatuses, or the like that are connected to the network NW.

The conveyance control portion 104 controls the drive motor and conveyor belt that are included in the circular conveyance portion 34, and adjusts the speed at which the package P is conveyed. Based on the position of the package P specified by the position specification portion 106, as well as the identification information regarding the package P acquired by the code reader 40 and destination information regarding the package P acquired by the data management portion 112, the conveyance control portion 104 controls one of the branching mechanisms 38 so as to convey the package P to the chute 36 that corresponds to the destination information.

The position specification portion 106 specifies the position of the package P based on, for example, the speed at which the conveyor belt of the circular conveyance portion 34 conveys the package P and the time when the package P was detected by the code reader 40.

The image recognition portion 108 has a function of performing OCR processing, which serves as image recognition processing. The image recognition portion 108 recognizes various kinds of information (characters, numbers, symbols etc.) including the address information assigned to the package P and the identification information, based on the images captured by the cameras 50.

If a part or all of the address information assigned to the package P has been recognized by the image recognition portion 108, the address specification portion 110 searches an address database 126, which is stored in the storage portion 120, using the recognized address information, and specifies the address information assigned to the package P based on the information acquired through the search.

If, for example, the address information stored in the address database 126 matches the address information recognized by the image recognition portion 108 to a predetermined degree or more, and if no other address information stored in the address database 126 matches to the predetermined degree or more, the address specification portion 110 specifies the recognized address information as the address information regarding the package P. If, for example, a plurality of pieces of address information stored in the address database 126 match the information recognized by the image recognition portion 108 to the predetermined degree or more, the address specification portion 110 specifies the plurality of pieces of address information as candidate addresses.

Based on first recognized information (described later) that includes at least the identification information regarding the package P that is the result of image recognition performed on the images of the package P captured by the cameras 50, and the contents information indicating the contents of the package P, and on second recognized information that has been input regarding the image of the package P to any of one or more terminal apparatuses VCDs 70 to which the images of the package P captured by the cameras 50 have been sent, the data management portion 112 generates and manages package information (database) 124 in which the identification information regarding the package P is associated with the recognized information regarding the package P. The data management portion 112 stores the result of inspection performed on the package (described later) in the storage portion 120.

If predetermined information that is required for inspection of the package P and includes the address information regarding the package P has not been specified by the image recognition portion 108 and the address specification portion 110, the data management portion 112 transmits, to the VCDs 70, the images captured by the cameras 50 and the result of processing executed by the image recognition portion 108 and address specification portion 110. The data management portion 112 may also transmit, to the VCDs 70, only the images of the package P.

First image data 122, the package information 124, and the address database 126 are stored in the storage portion 120. The first image data 122 is a set of package images captured by the cameras 50. These images are stored in association with the identification information regarding the package P.

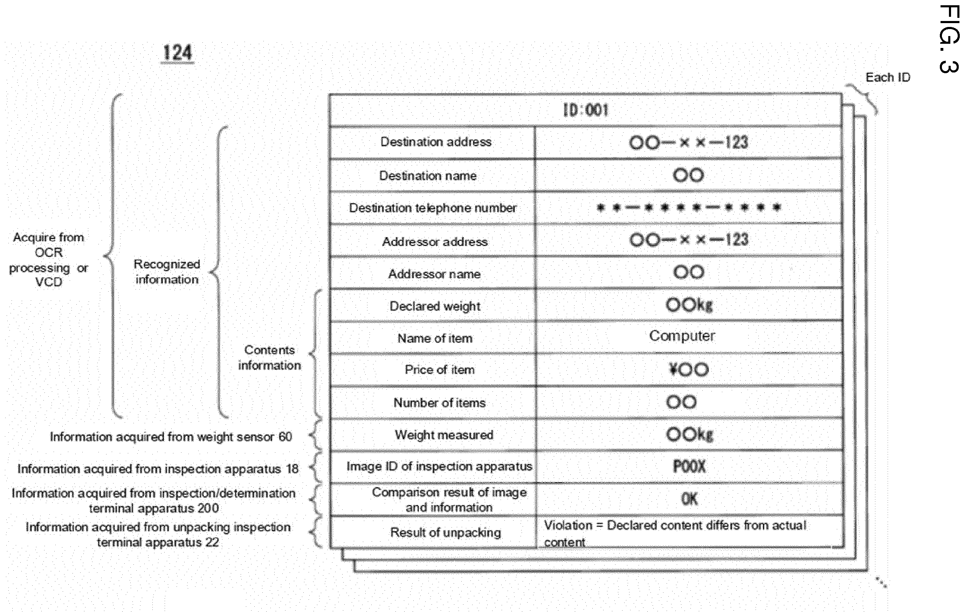

The package information 124 includes information acquired through OCR performed by the image recognition portion 108, or information transmitted from the VCDs 70. Fig. 3 depicts an example of the information registered as the package information 124. The package information 124 includes the weight of the package P measured by the weight sensor 60 that is associated with the identification information assigned to the package P, recognized information, which will be described below, information (second image and identification information) acquired by the radiographic apparatus 18, information such as the inspection result, and so forth. The inspection result includes the information transmitted from the inspection/determination terminal apparatus 200 and the information transmitted from the unpacking inspection terminal apparatus 22.

The recognized information includes at least contents information, which indicates the contents of the package P, and also includes any information that the inspector considers to be required for inspecting the package P, such as a destination address of the package P, a destination name, a destination telephone number, a sender address, a sender name, and information transmitted from the inspection management apparatus 150. The contents information is information that indicates the contents of the package P stated on a form F or the like attached to the package P, and includes the weight of the package P, the name of each item, the price of each item, the number of items, and so forth, for example. The contents information is information declared by the sender of the package P, for example. The information transmitted from the inspection/determination terminal apparatus 200 is information that indicates the result of the inspector comparing between the second image displayed on the display portion of the inspection/determination terminal apparatus 200 and the recognized information (or contents information), for example. The information transmitted from the unpacking inspection terminal apparatus 22 is information that indicates the result of the inspector unpacking the package P and comparing between the contents of the package P and the recognized information (or contents information), for example. The information transmitted from the inspection/determination terminal apparatus 200 and the unpacking inspection terminal apparatus 22 is information that indicates the result of the package P having been inspected (an example of an inspection result).

The VCDs 70 communicate with the sorting management apparatus 100 via the network NW. The VCDs 70 receives information for video coding (coding data) that includes the images of the package P transmitted from the sorting management apparatus 100. The coding data is transmitted from the sorting management apparatus 100 to the VCDs 70 if the recognized information could not be acquired by the image recognition portion 108 of the sorting management apparatus 100. If a part of the address information and/or a part of other information, for example, is recognized from the image of the package P by the image recognition portion 108 of the sorting management apparatus 100, the coding data may include such a part of information. If the address specification portion 110 cannot narrow down an address from the plurality of candidate addresses, the coding data may include information regarding the plurality of candidate addresses.

The VCDs 70 include a display portion for video coding, an operation portion to which the operator makes an operation to input information, and a processing portion for executing various kinds of processing. The operator makes an operation to the operation portion to input information regarding the package P based on the information displayed on the display portion. The display portion of VCDs 70 displays, for example, the images of the package P and the information recognized by the sorting management apparatus 100 in association with each other. The operation portion is a user interface, such as a button, a keyboard, a mouse, a microphone, or a touch panel.

Based on the information input through an operation made to the operation portion, the processing portion derives candidate information that is predicted to be input next, and displays the derived candidate on the display portion. The processing portion derives the candidate information that is predicted to be input next based on a preset dictionary, past input information, or the like. The operator references the images captured by the cameras 50, and selects information assigned to the package P from the candidates displayed on the display portion. Thus, the operator can readily and quickly perform an input operation.

The plurality of VCDs 70 may have respective roles. For example, an operator of the VCD70-1 is assigned a role of inputting information that indicates the destination address of the package P, an operator of the VCD70-2 is assigned a role of inputting information that indicates the destination name of the package P, and an operator of the VCD70-3 is assigned a role of inputting the contents information that indicates the contents of the package P.

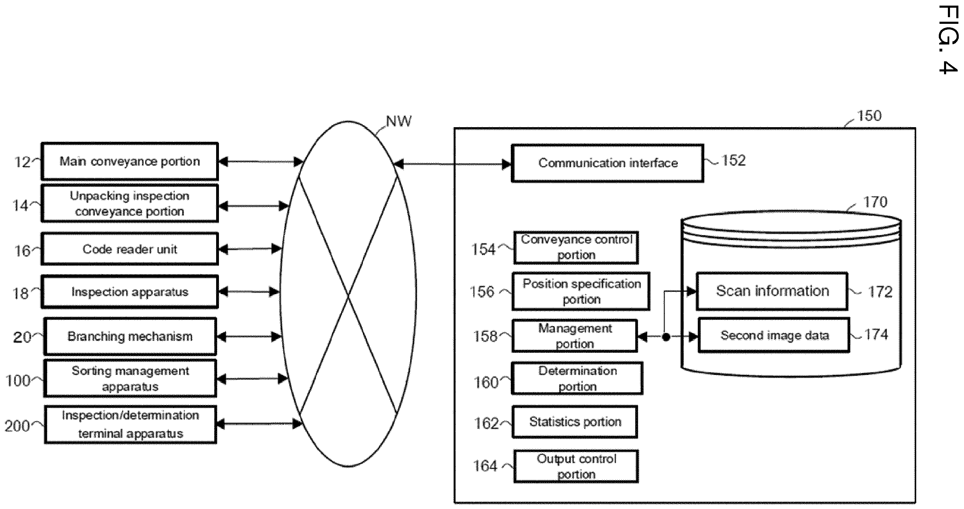

Fig. 4 depicts a functional configuration of the inspection management apparatus 150. The inspection management apparatus 150 includes, for example, a communication interface 152, a conveyance control portion 154, a position specification portion 156, a management portion 158, a determination portion 160, a statistics portion 162, an output control portion 164, and a storage portion 170. Some or all of the conveyance control portion 154, the position specification portion 156, the management portion 158, the determination portion 160, the statistics portion 162, and the output control portion 164 may be implemented as a result of a processor, such as a CPU, executing a program. Some or all of these functional portions may be implemented by hardware, such as an LSI, ASIC, or FPGA. The storage portion 170 is implemented by a storage device, such as a RAM, a ROM, a HDD, or a flash memory. The sorting management apparatus 100 and the inspection management apparatus 150 may be a single integrated computer, or may be implemented by a plurality of decentralized computers.

The conveyance control portion 154 controls the drive motors and conveyor belts that are included in the main conveyance portion 12 and the unpacking inspection conveyance portion 14, and adjusts the speed at which the package P is conveyed. The conveyance control portion 154 also controls the branching mechanism 20 based on the information acquired from the management portion 158 and the radiographic apparatus 18. When a target package P reaches the branching mechanism 20, the conveyance control portion 154 controls the branching mechanism 20 based on the result of determination performed by the determination portion 160, and conveys the target package P to the unpacking inspection conveyance portion 14.

The position specification portion 156 specifies the position of the package P based on, for example, the speed at which the conveyor belt of the main conveyance portion 12 conveys the package P and the time at which the package P was detected by the detection sensor provided in the radiographic apparatus 18 or the main conveyance portion 12.

The management portion 158 causes the storage portion 170 to store the information acquired from the code reader unit 16 (scan information) and the information acquired from the radiographic apparatus 18, and transmits the information stored in the storage portion 170 using the communication interface.

The determination portion 160 references the package information 124 managed by the data management portion 112 of the sorting management apparatus 100, using the identification information regarding the package P acquired by the code reader unit 16, which is provided before the radiographic apparatus 18 for obtaining a radiographic image of the package P. The determination portion 160 then determines whether or not all of the predetermined information required for inspection of the package among the recognized information is ready.

The predetermined information required for inspection to be performed by the inspector is information declared by the sender, and is information to be compared with the information recognized from the image acquired by the radiographic apparatus 18. The predetermined information required for inspection performed by the inspector includes, for example, some or all of the weight of the package P measured by the weight sensor 60, the weight of the package P declared by the sender, the name of each item in the package P, the price of the package P, the number of packages P, the destination address of the package P, the destination name, the destination telephone number, the sender address, and the sender name. It is favorable that the predetermined information required for inspection includes at least some of the weight of the package P declared by the sender, the name of each item in the package P, the price of the package P, and the number of packages P. If the predetermined information required for inspection includes the weight of the package P declared by the sender, the weight of the package P measured by the weight sensor 60 is included in the predetermined information required for inspection.

The statistics portion 162 acquires the inspection result from the unpacking inspection terminal apparatus 22 that is associated with the identification information regarding the package P, extracts the sender of the package whose contents do not match the contents information indicating the contents of the package and is associated with the identification information in the package information 124 managed by the data management portion 112 of the sorting management apparatus 100, accumulates the extraction history, and derives information regarding any sender for whom the number of times or frequency that the contents information indicating the contents of the package did not match the contents of a package has exceeded a predetermined threshold value. The information regarding the senders is information such as the number of times or frequency that the contents of a package did not match the contents information that indicates the contents of the package, the name and address of the sender, the contents information regarding packages that were sent by the sender in the past, and the number of times that an unpacking inspection was performed.

Note that the threshold value may be set to any value. For example, the threshold value may be changed as a result of a predetermined input operation being made to the unpacking inspection terminal apparatus 22. The threshold value may be changed with the number of times that an unpacking inspection of a package P was performed, the number of times that a violation was determined as a result of the inspection, the place of origin of the package P, or the like as parameters. The statistics portion 162 may set a relatively small threshold value when one of or both the number of times that an unpacking inspection of a package P was performed and the number of times that a violation was determined as a result of the inspection tend to be large. The statistics portion 162 may set a relatively small threshold value when the place of origin of the package P is a predetermined area.

The statistics portion 162 derives the number of time or frequency that the contents information indicating the contents of a package did not match the contents of the package, in association with any sender for whom the number of times or frequency that the contents information did not match the contents of a package has exceeded the predetermined threshold value.

If it is determined by the determination portion 160 that not all of the predetermined information is ready, the output control portion 164 causes the unpacking inspection terminal apparatus 22, the inspection/determination terminal apparatus 200, and the like to output notification information. The output control portion 164 causes the unpacking inspection terminal apparatus 22, the inspection/determination terminal apparatus 200, or the like to output the information derived by the statistics portion 162. The output control portion 164 transmits, to an apparatus connected to the network NW such as the unpacking inspection terminal apparatus 22 or the inspection/determination terminal apparatus 200, the information regarding any sender for whom the number of times or frequency that the contents information indicating the contents of a package did not match the contents of the package has exceeded the predetermined threshold value, and causes the transmission destination apparatus to output the information regarding the sender. The statistics portion 162 and the output control portion 164 are examples of an alert portion.

Scan information 172 and second image data 174 are stored in the storage portion 170. The scan information 172 is information in which the information read by the code reader unit 16 is associated with the time when the information was read by the code reader unit 16. The second image data 174 is a set of information in which the second image acquired from the radiographic apparatus 18 is associated with the time when the second image was generated.

Based on, for example, the time when the identification information regarding the package P was read by the code reader unit 16, the time when the second image was generated by the radiographic apparatus 18, and information regarding the position of the package P specified by the detection sensor provided in the main conveyance portion 12, the management portion 158 associates the identification information regarding the package P read by the code reader unit 16 with the second image generated by the radiographic apparatus 18.

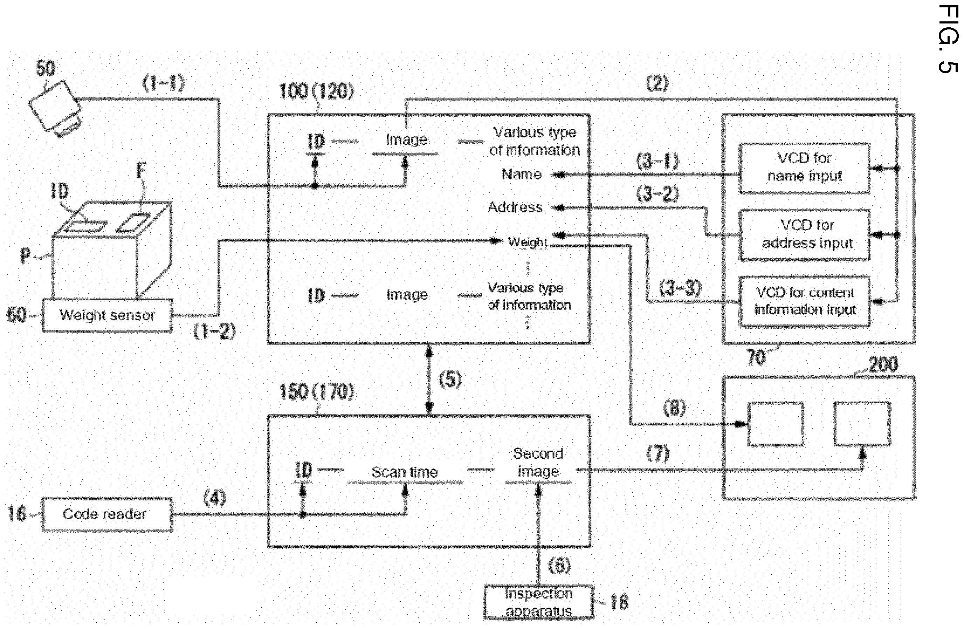

Fig. 5 conceptually depicts processing executed by the package inspection system. The images captured by the cameras 50 are stored in the storage portion 120 of the sorting management apparatus 100 (1-1). The measurement result regarding the package P measured by the weight sensor 60 is also stored in the storage portion 120 (1-2). The sorting management apparatus 100 executes OCR processing on the images captured by the cameras 50. If the predetermined information required for inspection performed by the inspector cannot be acquired, the sorting management apparatus 100 transmits those images to the VCDs 70 (2). The VCDs 70 each transmit the information input by the operator to the sorting management apparatus 100. Thus, the predetermined information required for inspection performed by the inspector is stored in the storage portion 120 of the sorting management apparatus 100 (3-1 to 3-3).

Next, the identification information read by the code reader unit 16 and the time when the identification information was acquired (scan time) are stored in association with each other in the storage portion 170 of the inspection management apparatus 150 (4). The inspection management apparatus 150 references the information that is stored in the storage portion 120 of the sorting management apparatus 100 and is associated with the identification information that matches the identification information acquired at the time of (4) above, and determines whether or not the predetermined information required for inspection has been acquired (5). If it is determined that the predetermined information has been acquired, the inspection management apparatus 150 causes the display portion of the code reader unit 16 to display information for prompting the operator to execute image capture using the radiographic apparatus 18. If it is not determined that the predetermined information has been acquired, the inspection management apparatus 150 causes the display portion of the code reader unit 16 to display information for banning execution of image capture using the radiographic apparatus 18.

If the information for banning execution of image capture using the radiographic apparatus 18 is output to the display portion, the operator moves the target package P to a pending area for temporarily holding the package P. If the information for prompting the operator to execute image capture using the radiographic apparatus 18 is displayed on the display portion, the operator does not move the target package P, and checks that the target package P is being conveyed in the direction moving toward the area where the radiographic apparatus 18 is provided. Thus, the second image of the package P is acquired by the radiographic apparatus 18.

Note that the inspection management apparatus 150 may request the sorting management apparatus 100 to perform the determination of (5) above. In this case, the sorting management apparatus 100 acquires, from the inspection management apparatus 150, the identification information regarding the package P for which the determination is to be performed, references the information that is associated with the identification information that matches the acquired identification information, and determines whether or not the required information has been acquired. The sorting management apparatus 100 then transmits the determination result to the inspection management apparatus 150.

The radiographic apparatus 18 acquires the second image, and transmits the acquired image to the inspection management apparatus 150. The second image acquired by the radiographic apparatus 18 is stored in the storage portion 170 of the inspection management apparatus 150 in association with the identification information read by the code reader unit 16 (6).

Next, the inspection management apparatus 150 transmits, to the inspection/determination terminal apparatus 200, the second image and the identification information regarding the package P in association with each other (7). The sorting management apparatus 100 transmits, to the inspection/determination terminal apparatus 200, the predetermined information required for inspection and the identification information regarding the package P in association with each other (8). Thus, the predetermined information required for inspection and the second image are displayed in association with each other on the display portion of the inspection/determination terminal apparatus 200.

The inspector can compare the second image and the predetermined information required for inspection that are displayed on the display portion, and determine whether or not there is any discrepancy between information indicated as the predetermined information required for inspection and the second image of the package P. The inspector makes an operation to input the determination result as the inspection result to the operation portion of the inspection/determination terminal apparatus 200.

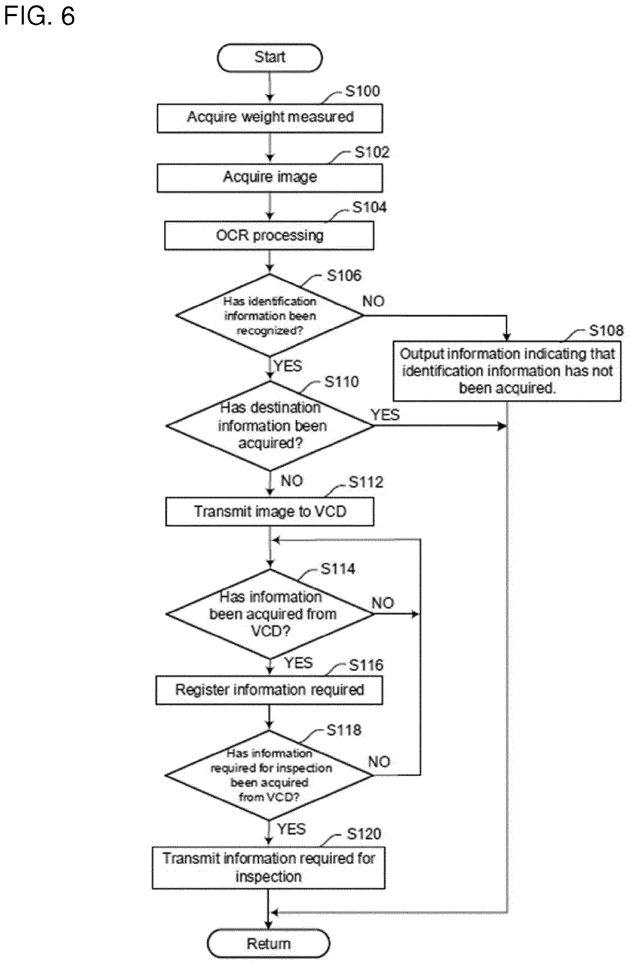

Fig. 6 is a flowchart illustrating a flow of processing executed by the sorting management apparatus 100. First, the communication interface 102 of the sorting management apparatus 100 acquires the weight of the package P measured by the weight sensor 60 and the images captured by the cameras 50 (steps S100 and S102).

Next, the image recognition portion 108 executes OCR processing on the images captured by the cameras 50 (step S104). Next, the data management portion 112 determines whether or not the identification information assigned to the package P has been recognized as a result of the OCR processing (step S106). If the identification information could not be recognized, predetermined processing is executed (step S108). For example, the sorting management apparatus 100 causes the information output portion provided in the sorting management apparatus 100 to output information indicating that the identification information could not be recognized. In this case, for example, the operator checks the identification information regarding the package P. If no identification information is assigned thereto, the operator sticks, to the package P, a seal or the like on which identification information is displayed.

Note that the identification information recognized here may also be identification information that has been assigned by a sender. For example, identification information that has been assigned to the package P by a company or the like that often sends packages P may be used as the identification information to be used in the package inspection system. For example, if the sorting management apparatus 100 has recognized a pre-registered combination of numbers, symbols, characters, or the like, information that includes this combination may also be determined to be identification information that can be used in the package inspection system.

If the identification information has been recognized, the data management portion 112 determines whether or not the predetermined information required for inspection assigned to the package P has been acquired as a result of the OCR processing (step S110). If the predetermined information required for inspection has been acquired, processing for a single routine of this flowchart ends. If the predetermined information required for inspection could not be acquired, the data management portion 112 transmits, to the VCDs 70, the images captured by the cameras 50 and the result of the OCR processing in association with each other (step S112).

Next, the data management portion 112 waits until information is acquired from the VCDs 70 (step S114). If information has been acquired from the VCDs 70, the data management portion 112 registers the information acquired from the VCDs 70 as the package information 124 (step S116).

Next, the data management portion 112 determines whether or not the predetermined information required for inspection has been registered as the package information 124 (step S118). If the predetermined information required for inspection has not been registered as the package information 124, the processing returns to step S114. If the predetermined information required for inspection has been registered as the package information 124, the data management portion 112 transmits the predetermined information required for inspection to the inspection/determination terminal apparatus 200 (step S120). Processing for a single routine of this flowchart thus ends.

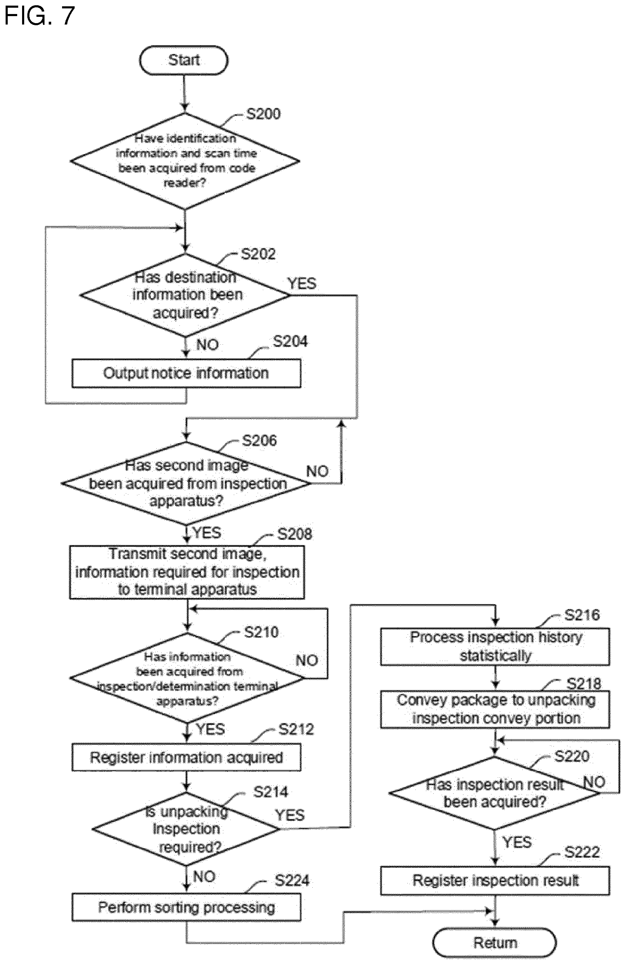

Fig. 7 is a flowchart illustrating a flow of processing executed by the inspection management apparatus 150. First, the communication interface 152 of the inspection management apparatus 150 waits until it has acquired the information in which the identification information regarding the package P acquired by the code reader unit 16 and the time when this identification information was acquired are associated with each other (step S200).

If the communication interface 152 has acquired the information in which the identification information regarding the package P acquired by the code reader unit 16 and the time when this identification information was acquired are associated with each other, the determination portion 160 references the information that is stored in the storage portion 120 of the sorting management apparatus 100 and is associated with the identification information that matches the identification information acquired in step S200, and determines whether or not the predetermined information required for inspection has been acquired (step S202).

If the predetermined information required for inspection has not been acquired, the output control portion 164 causes the display portion of the code reader unit 16 to display information (notification information) indicating that not all predetermined information required for inspection is ready (step S204). This is because the predetermined information required for inspection that is to be compared with the second image is not present, and the inspector accordingly cannot perform the inspection to compare the information with the second image even if the second image is acquired, and cannot smoothly advance the processing.

If the predetermined information required for inspection has been acquired, the inspection management apparatus 150 waits until it has acquired the second image from the radiographic apparatus 18 (step S206). Upon the inspection management apparatus 150 acquiring the second image from the radiographic apparatus 18, the management portion 158 transmits the second image and the predetermined information required for inspection to the inspection/determination terminal apparatus 200 (step S208). For example, the management portion 158 transmits, to the inspection/determination terminal apparatus 200, the second image and the identification information in association with each other, and also transmits, to the sorting management apparatus 100, instruction information for instructing to transmit, to the inspection/determination terminal apparatus 200, the predetermined information required for inspection. This instruction information includes the identification information that is associated with the predetermined information required for inspection of the target package P, for example. The sorting management apparatus 100 then transmits, to the inspection/determination terminal apparatus 200, the identification information included in the transmitted instruction information and the predetermined information required for inspection that is associated with this identification information. The inspection/determination terminal apparatus 200 displays, on the display portion, the second image transmitted from the sorting management apparatus 100 and the recognized information transmitted from the inspection management apparatus 150 in association with each other.

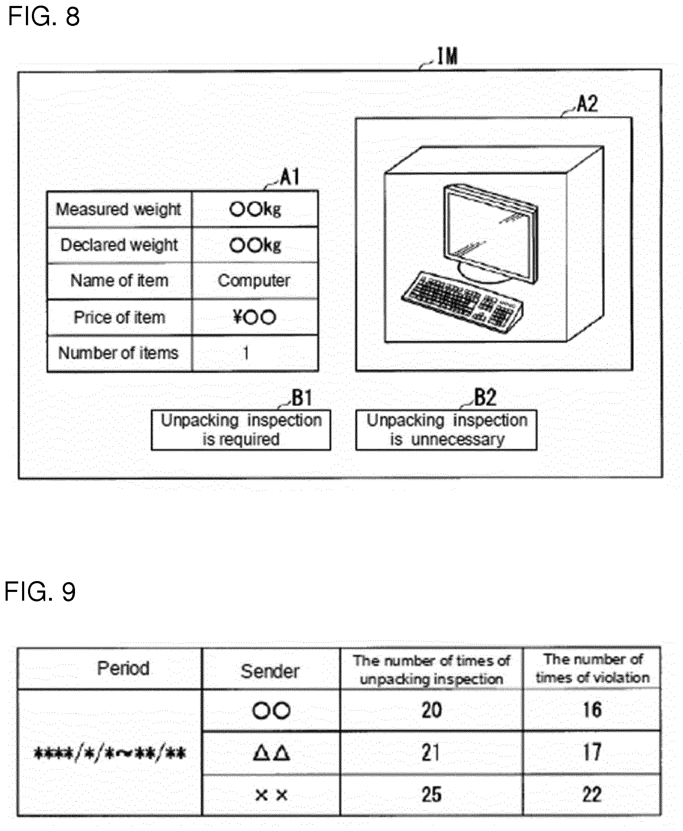

Fig. 8 depicts an example of an image IM displayed on a display portion of the inspection/determination terminal apparatus 200. The image IM includes an area A1, in which the predetermined information required for inspection is displayed, and an area A2, in which the second image is displayed. The image IM also includes an "unpacking inspection needed" button B1 for determining that an unpacking inspection is needed, and an "unpacking inspection not needed" button B2 for determining that an unpacking inspection is not needed. The inspector determines whether or not unpacking inspection is needed based on whether the predetermined information required for inspection differs from information that can be recognized from the second image, for example. The result of determination of whether or not unpacking inspection is needed is another example of the inspection result.

For example, if the weight of the package P measured by the weight sensor 60 differs from the weight of the package P included in the predetermined information required for inspection to a predetermined degree or more, or if the name of each item in the package P included in the predetermined information required for inspection differs from the name of each item in the package P recognized from the second image, the inspector makes an input operation to the "unpacking inspection needed" button B1. The inspection/determination terminal apparatus 200 transmits the result of the input operation to the inspection management apparatus 150. The package P is conveyed to the unpacking inspection conveyance portion 14 and is opened by the inspector, who inspects the package P in detail.

The image IM may also display information indicating the number of times or frequency that it was determined that "unpacking inspection is needed" regarding packages sent by the sender in the past, the number of times or frequency being the result of processing performed by the statistics portion 162. If the number of times or frequency that it was determined in the past that "unpacking inspection is needed" has exceeded a predetermined threshold value, information indicating that the number of times or frequency has exceeded the threshold value, or information indicating the number of times or frequency that it was determined that "unpacking inspection is needed" may be displayed in the image IM. Thus, the inspector can infer the credibility of the contents of the package P declared by the sender.

Next, the management portion 158 waits until it has acquired information from the inspection/determination terminal apparatus 200 (step S210). Upon acquiring information from the inspection/determination terminal apparatus 200, the management portion 158 registers the acquired information as the package information 124 (step S212), and determines whether or not it has acquired information indicating that an unpacking inspection of the package P is needed (step S214).

If the management portion 158 has acquired the information indicating that an unpacking inspection is needed, the statistics portion 162 statistically processes the package inspection history regarding the sender of the package P (step S216). The package inspection history is information indicating the result of inspection of packages that were sent prior to this processing by the sender of the package P that is being processed.

The result of processing performed by the statistics portion 162 may be displayed on the display portion of the unpacking inspection terminal apparatus 22, or may be displayed on the display portion of the inspection management apparatus 150, the inspection/determination terminal apparatus 200, or the like. If a predetermined request signal has been acquired from the inspection/determination terminal apparatus 200, the unpacking inspection terminal apparatus 22, or the like, the statistics portion 162, after acquiring the request signal, may transmit the information indicating the result of statistically processing the package inspection history to the inspection/determination terminal apparatus 200, the unpacking inspection terminal apparatus 22, or the like.

Fig. 9 depicts an example of an image that is displayed on the display portion of the unpacking inspection terminal apparatus 22 and indicates the result of processing performed by the statistics portion 162. For example, the result of statistically processing the package inspection history includes the number of times that a package was unpacked and inspected (the number of times that an input operation was made to the button B1 in Fig. 8), the number of times that a package was unpacked and inspected and violation was determined (i.e. the declared contents differed from the actual contents), or the like, regarding the sender of each package in a certain period. The display portion of the unpacking inspection terminal apparatus 22 may display the number of times that a package of the sender of the inspection target package was opened and inspected, the number of times that a package was unpacked and inspected and violation was determined, or the like.

Note that, upon a predetermined input operation being made by the operator, the management portion 158 causes the display portion of the unpacking inspection terminal apparatus 22 to display information that corresponds to the predetermined input operation. For example, if an input operation is made to display, on the display portion, information indicating the content of past violation regarding a certain sender, the management portion 158 causes the display portion to display information indicating the details of the content of the past violation regarding this sender.

As a result of the result of statistically processing the package inspection history being thus displayed on the display portion, a sender who has declared false information many times can be specified. Also, for example, if the package P that is being processed is a package sent by a sender who has declared false information many times, the inspector can recognize, while processing the package P, that the package P was sent by a sender who has declared false information many times.

Returning to Fig. 7, the conveyance control portion 154 conveys the package P to the unpacking inspection conveyance portion 14 (step S218). The package P that has been conveyed to the unpacking inspection conveyance portion 14 is opened by the inspector, and the contents of the package P is inspected. The inspector operates the unpacking inspection terminal apparatus 22 to input information regarding the inspection result. The input information is information indicating the contents of the package P, information indicating a difference between the contents information declared by the sender and the actual contents of the package P, or the like, for example. The unpacking inspection terminal apparatus 22 transmits the input information as the inspection result to the inspection management apparatus 150. The management portion 158 waits until it has acquired the inspection result (step S220). Upon acquiring the inspection result, the management portion 158 registers the acquired inspection result in the storage portion 120 (package information 124) of the sorting management apparatus 100 (step S222).

If, in step S214, information indicating that an unpacking inspection is not needed is acquired, sorting processing is performed (step S224). Sorting processing is processing in which the package P is inserted into the insertion portion 32 of the sorting unit 30 by the operator, and the sorting unit 30 conveys this package P to a predetermined chute 36 based on the destination information regarding the inserted package P. Processing for a single routine of this flowchart thus ends.

According to the above-described first embodiment, the package inspection system includes: the data management portion 112 for generating and managing the package information 124 in which the identification information regarding the package P is associated with the recognized information regarding the package P, based on the first recognized information that includes at least the identification information regarding the package P that is the result of image recognition performed on the images of the package P captured by the cameras 50, and the contents information indicating the contents of the package P, and on the second recognized information that has been input, regarding the images of the package P, to any of one or more VCDs 70 to which the images of the package P captured by the cameras 50 have been sent; the determination portion 160 for referencing the package information 124 that is managed by the data management portion 112 using the identification information regarding the package P acquired by the code reader unit 16, which is provided before the radiographic apparatus 18 for obtaining a radiographic image of the package P, and for determining whether or not all of the predetermined information required for inspection of the package, among the recognized information, is ready; and the output control portion 164 for causing the output portion to output the notification information indicating that not all of the predetermined information required for inspection is ready if it is determined by the determination portion 160 that not all of the predetermined information required for inspection is ready. With this configuration, smoother processing can be realized.

In addition, in the package inspection system according to the first embodiment, the identification information regarding the package P is acquired by the code reader unit 16. When the predetermined information required for inspection cannot be acquired, the output portion is caused to output the notification information. Accordingly, the operator can readily detect a package P regarding which the predetermined information required for inspection has not been acquired. For example, if the code reader unit 16 includes an output portion, the operator can find any package P regarding which the predetermined information required for inspection has not been acquired, immediately after inserting the package P into the main conveyance portion 12. With this configuration, the operator can temporarily move, to the pending area, any package P regarding which the predetermined information required for inspection has not been acquired. As a result, regarding this package inspection system, provision of a sufficiently long conveyance path reaching the radiographic apparatus 18 to gain time taken until the predetermined information required for inspection is acquired is less necessary. Accordingly, the route between the upstream end of the main conveyance portion 12 and the radiographic apparatus 18 can be made shorter.

The package inspection system according to the first embodiment includes: the data management portion 112 for generating and managing the package information 124 in which the identification information regarding the package P is associated with the recognized information regarding the package P, based on the first recognized information that includes at least the identification information regarding the package P that is the result of image recognition performed on the images of the package P captured by the cameras 50, and the sender and contents of the package P, and on the second recognized information that has been input, regarding the images of the package P, to any of one or more VCDs 70 to which the images of the package P captured by the cameras 50 have been sent, the data management portion 112 being also for storing the result of inspection performed on the package P in the storage portion 120; and the alert portion (162, 164) for extracting the sender of the package whose contents do not match the contents information that indicates the contents of the package P and is associated with the identification information in the storage portion 120 managed by the data management portion 112 and accumulating the extraction history, and for causing the output portion to output information regarding any sender for whom the number of times or frequency that the contents information indicating the contents of a package P did not match the contents of the package has exceeded the predetermined threshold value. With this configuration, a sender who tends to make inappropriate declarations can be extracted.

Note that a configuration may also be employed in which the image recognition portion 108 and the address specification portion 110 of the sorting management apparatus 100 are provided in other apparatuses connected to the network NW, and the sorting management apparatus 100 requests the other apparatuses in which the image recognition portion 108 and the address specification portion 110 are provided to perform OCR processing and processing to specify an address from the result of the OCR processing. In this case, the sorting management apparatus 100 acquires the result of OCR processing and processing to specify the address from the other apparatuses via the network NW.

### Second Embodiment

A package inspection system according to the second embodiment will be described below. In the first embodiment, the package P is processed in the inspection unit 10, and is then processed in the sorting unit 30. In contrast, in the second embodiment, the package P is processed in the sorting unit 30 before being processed in the inspection unit 10. In addition, in the package inspection system according to the second embodiment, a camera 50 and weight sensors 60-1 to 60-3 are provided near insertion portions 32 of the sorting unit 30. Those differences will be mainly described below, and shared configurations will be omitted in the following description.

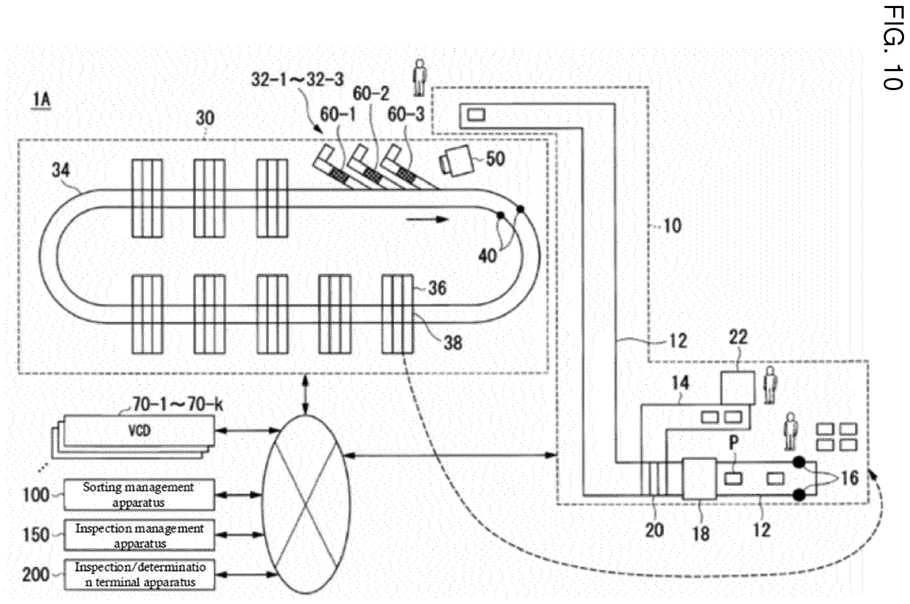

Fig. 10 is a configuration diagram of a classification system 1A, which includes a package inspection system. The camera 50 is provided near insertion portions 32-1 to 32-3, for example. The camera 50 captures an image of a package P inserted into any of the insertion portions 32. The weight sensors 60-1 to 60-3 are arranged below conveyance rollers of the insertion portions 32-1 to 32-3, respectively, and measure the weight of packages P placed on the conveyance rollers. In the following description, when the insertion portions 32-1 to 32-3 are not distinguished from one another, these insertion portions will be simply referred to as the insertion portions 32. When the weight sensors 60-1 to 60-3 are not distinguished from one another, these weight sensors will be referred to simply as the weight sensors 60.

In this embodiment, a package P is inserted into any one of the insertion portions 32 by the operator, for example. The sorting management apparatus 100 controls the sorting unit 30, and causes the conveyance roller of the corresponding insertion portion 32 to convey the package P. The conveyers, which include the conveyance roller below which the weight sensors 60 are provided, are separated from conveyers before and after them. The weight sensors 60 measure the weight of a package P when the package P is being conveyed by the separate conveyer. Note that, if a subsequent package P is about to proceed to the separate conveyer in the state where the previous package P is still present on the separate conveyer, conveyance of the subsequent package P is temporarily stopped until the previous package P has passed through the separate conveyer. Thus, the package P stops on the conveyance roller below which the corresponding weight sensor 60 is provided. The sorting management apparatus 100 controls the camera 50 to capture an image of the package P, and also acquires the result of measurement performed by the weight sensor 60. As a result of the sorting management apparatus 100 thus controlling respective portions of the sorting unit 30, the image and weight of the package P inserted into each insertion portion 32 are automatically acquired. A dotted arrow in Fig. 10 indicates an example of a route through which the package P, which has been sorted into a corresponding chute 36 based on the destination information in the sorting unit 30 is conveyed to the inspection unit 10.

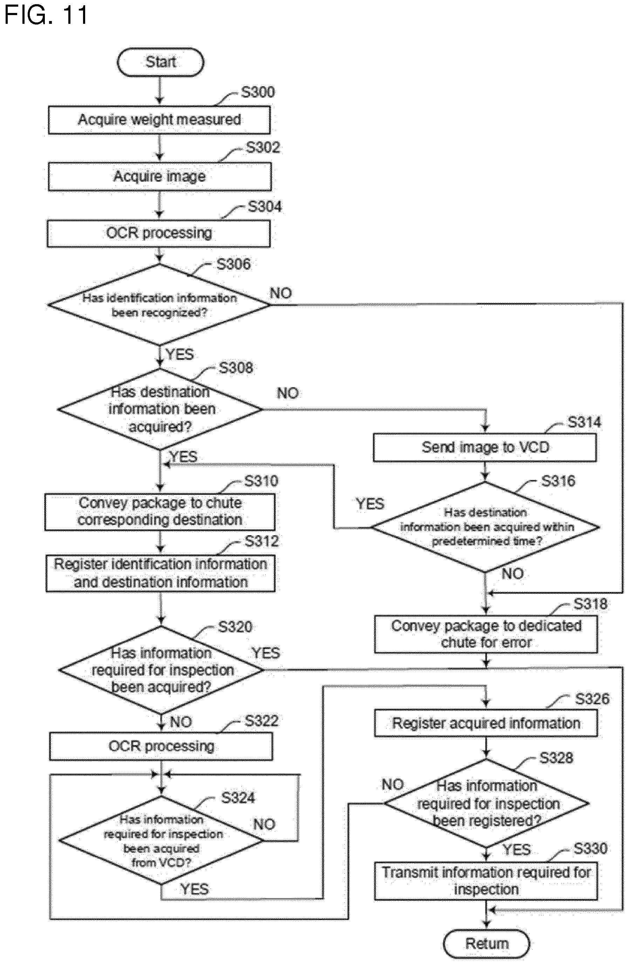

Fig. 11 is a flowchart illustrating a flow of processing executed by the sorting management apparatus 100 according to the second embodiment. First, the communication interface 102 of the sorting management apparatus 100 acquires the weight of the package P measured by the corresponding weight sensor 60 and the image captured by the camera 50 (steps S300 and S302).

Next, the image recognition portion 108 executes OCR processing, which serves as image recognition processing, on the image captured by the camera 50 (step S304). Next, the data management portion 112 determines whether or not the identification information assigned to the package P has been recognized as a result of the OCR processing (step S306). If the identification information could not be recognized, the conveyance control portion 104 conveys the package P to an error chute 37 (step S318).

If the identification information has been recognized, the data management portion 112 determines whether or not the destination information assigned to the package P has been acquired as a result of the OCR processing (step S308). If the destination information has been acquired, the conveyance control portion 104 conveys the package P to the chute 36 that is associated with the acquired destination information (step S310) Next, the data management portion 112 registers the identification information and the destination information as the package information 124 (step S312).

If, in step S308, the destination information cannot be acquired, the data management portion 112 transmits, to the VCDs 70, the image captured by the camera 50 and the result of the OCR processing in association with each other (step S314). The data management portion 112 determines whether or not it has acquired the destination information from the VCDs 70 within a predetermined time (step S316). If the destination information could not be acquired from the VCDs 70 within the predetermined time, the processing proceeds to step S318. While the destination information cannot be acquired, the package P circulates around the circular conveyance portion 34. If the destination information has been acquired from the VCDs 70 within the predetermined time, the processing proceeds to step S310.

Next, the data management portion 112 determines whether or not it has acquired predetermined information required for inspection other than the destination information (step S320). If the predetermined information required for inspection has been acquired, processing for a single routine of this flowchart ends. If the predetermined information required for inspection could not be acquired, the data management portion 112 transmits, to the VCDs 70, the image captured by the camera 50 and the result of the OCR processing in association with each other (step S322).

Next, the data management portion 112 waits until it has acquired the predetermined information required for inspection from the VCDs 70 (step S324). If the predetermined information required for inspection has been acquired from the VCDs 70, the data management portion 112 registers the information acquired from the VCDs 70 as the package information 124 (step S326).

Next, the data management portion 112 determines whether or not the predetermined information required for the inspection has been registered as the package information 124 (step S328). If the predetermined information required for the inspection has not registered as the package information 124, the processing returns to step S324. If the predetermined information required for inspection has been registered as the package information 124, the data management portion 112 transmits the predetermined information required for the inspection to the inspection/determination terminal apparatus 200 (step S330). Processing for a single routine of this flowchart thus ends.

Through the above-described processing, the package P is sorted into a predetermined chute 36 based on the destination information. Then, the operator moves a group of sorted packages P to the inspection unit 10. In the inspection unit 10, the sorted packages P are inspected for each classification. Accordingly, packages P can be processed for each classification after the inspection. In addition, after the processing has been performed in the sorting unit 30, the predetermined information required for inspection that could not be acquired through the OCR processing can be acquired from the VCDs 70 while the package P is being moved to the inspection unit 10. Accordingly, processing in the inspection unit 10 can be performed without stop.

According to the above-described second embodiment, the package P is carried to the inspection unit 10 after being sorted into a chute 36 based on the destination information in the sorting unit 30, and is inspected in the inspection unit 10. The result of image recognition performed on the image of the package P captured by the camera 50 and the information input to the VCDs 70 can be acquired while the package P is being carried from the sorting unit 30 to the inspection unit 10. Accordingly, processing can be more smoothly performed.

### Third Embodiment

An inspection unit 10A of a package inspection system according to the third embodiment will be described below. The inspection unit 10A according to the third embodiment has a different configuration from that of the inspection unit 10 included in the package inspection system according to the first embodiment. Those differences will be mainly described below, and shared configurations will be omitted in the following description.

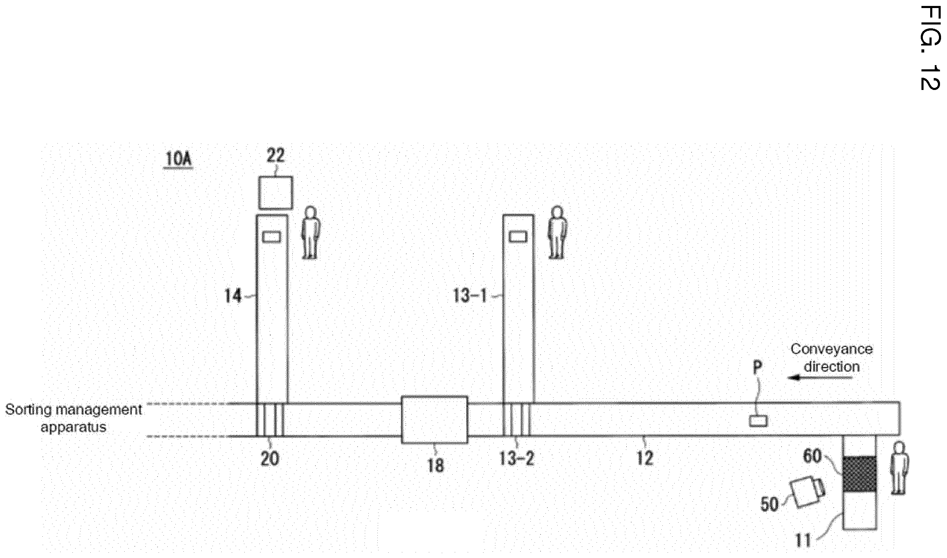

Fig. 12 is a configuration diagram of the inspection unit 10A according to the third embodiment. The inspection unit 10A includes, in addition to the configuration of the inspection unit 10 according to the first embodiment, an insertion portion 11, a reject conveyance portion 13-1, a branching mechanism 13-2, the camera 50, and the weight sensor 60. Note that the code reader unit 16 may be omitted.

The configuration of the insertion portion 11 is the same as the configuration of the insertion portions 32 described in the second embodiment, and a description thereof will be omitted accordingly. The camera 50 is provided near the insertion portions 11, for example. The camera 50 captures an image of a package P inserted into the insertion portions 11. The weight sensor 60 is arranged below the conveyance roller of the insertion portion 11, and measures the weight of packages P placed on the conveyance rollers.

In the main conveyance portion 12, the reject conveyance portion 13-1 is joined to an area on the upstream side of the radiographic apparatus 18 and near the radiographic apparatus 18. The reject conveyance portion 13-1 includes a conveyor belt, a drive pulley, and a drive motor, for example. The branching mechanism 13-2 is provided near the area where the main conveyance portion 12 is joined to the reject conveyance portion 13-1. The branching mechanism 13-2 conveys, to the reject conveyance portion 13-1, a package P that has not yet passed through the radiographic apparatus 18 and regarding which predetermined information required for inspection could not be acquired. The length of the main conveyance portion 12 from the radiographic apparatus 18 to an area near the portion where the insertion portion 11 is joined to the main conveyance portion 12 according to the third embodiment is longer than (e.g. twice or more, or three times or more) the length of the main conveyance portion 12 from the radiographic apparatus 18 to the upstream end according to the first embodiment.

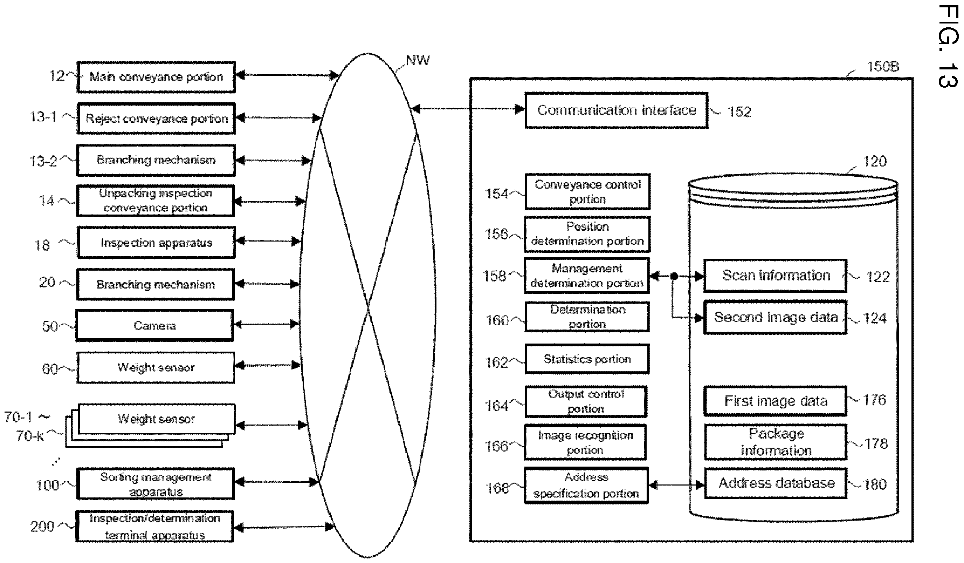

Fig. 13 depicts a functional configuration of an inspection management apparatus 150B according to the third embodiment. The inspection management apparatus 150B includes an image recognition portion 166 and an address specification portion 168, in addition to the functional configuration of the inspection management apparatus 150 according to the first embodiment. The functional configurations of the image recognition portion 166 and the address specification portion 168, which are the same as the configurations of the image recognition portion 108 and the address specification portion 110 according to the first embodiment, will be omitted. The communication interface 152 communicates with the reject conveyance portion 13-1, the branching mechanism 13-2, the VCDs 70, and the like.

First image data 176, package information 178, and an address database 180 are stored, in addition to the scan information 172 and the second image data 174, in the storage portion 170. Information stored in the first image data 176, information stored as the package information 178, and information stored in the address database 180 according to the third embodiment are the same as the information stored in the first image data 122, the information stored as the package information 124, and the information stored in the address database 126 according to the first embodiment. Accordingly, a description thereof will be omitted.

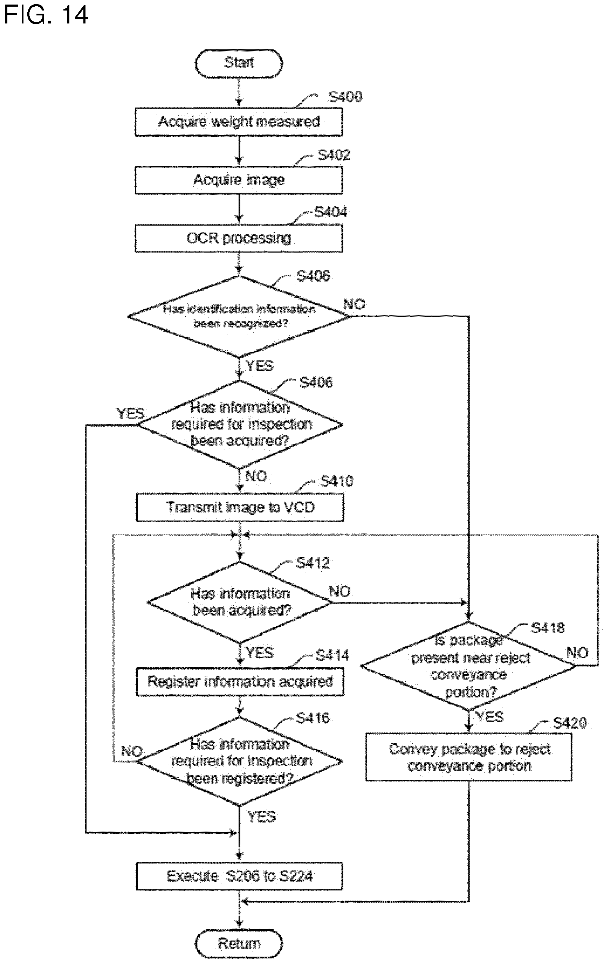

Fig. 14 is a flowchart illustrating a flow of processing executed by the inspection management apparatus 150B according to the third embodiment. First, the communication interface 152 of the inspection management apparatus 150B acquires the weight of the package P measured by the weight sensor 60 and the image captured by the camera 50 (steps S400 and S402).

Next, the image recognition portion 166 executes OCR processing on the image captured by the camera 50 (step S404). Next, the management portion 158 determines whether or not the identification information assigned to the package P has been recognized as a result of OCR processing (step S406). If the identification information could not be recognized, the processing proceeds to step S418.

If the identification information has been recognized, the management portion 158 determines whether or not predetermined information required for inspection has been acquired as a result of the OCR processing (step S408). If the predetermined information required for inspection has been acquired, processing in steps S206 to S222 in Fig. 7 is executed. In this embodiment, the camera 50 and the image recognition portion 166 function as an "identification information acquisition portion".

If the predetermined information required for the inspection has not been acquired, the management portion 158 transmits, to the VCDs 70, the image captured by the camera 50 and the result of the OCR processing in association with each other (step S410). The management portion 158 determines whether or not the information has been acquired from the VCDs 70 (step S412). If the information has been acquired from the VCDs 70, the management portion 158 registers the information acquired from the VCDs 70 as the package information 178 (step S414).

Next, the management portion 158 determines whether or not the predetermined information required for inspection has been acquired (step S416). If the predetermined information required for inspection has been acquired, processing in steps S206 to S224 in Fig. 7 is executed, and processing for a single routine of this flowchart ends. If the predetermined information required for the inspection has not been acquired, the processing returns to step S412.

If, in step S412, the predetermined information required for inspection could not be acquired from the VCDs 70, the position specification portion 156 determines whether or not the package P is present near the area (branching mechanism 13-2) where the main conveyance portion 12 is joined to the reject conveyance portion 13-1 (step S418).

If the package P is not present near the reject conveyance portion 13-1 (branching mechanism 13-2), the processing returns to step S412. If the package P is present near the reject conveyance portion 13-1 (branching mechanism 13-2), the conveyance control portion 154 controls the branching mechanism 13-2 to convey the package P to the reject conveyance portion 13-1 (step S420). Processing for a single routine of this flowchart thus ends.

According to the above-described third embodiment, the package P regarding which the predetermined information required for inspection has not been acquired is automatically conveyed to the reject conveyance portion 13-1 before the image thereof is obtained by the radiographic apparatus 18. As a result, the package P regarding which the predetermined information required for inspection has not been acquired can be prevented from being conveyed to the radiographic apparatus 18.

According to at least one of the above-described embodiments, a package inspection system includes: a data management portion for generating and managing a data table in which identification information regarding a package is associated with recognized information regarding the package, based on first recognized information that includes at least the identification information regarding the package that is a result of image recognition performed on an image of the package captured by an image capture portion and contents information indicating a sender of the package and contents of the package, and on second recognized information that is input, regarding the image of the package, to any of one or more terminal apparatuses to which the image of the package captured by the image capture portion has been sent, and for storing a result of inspection of the package in the data table; and an alert portion for extracting a sender of any package whose contents do not match the contents information indicating the contents of the package that is associated with the identification information in the data table and accumulating the extraction history, and for causing an output portion to output information regarding any sender for whom the number of times or frequency that the contents information indicating the contents of the package did not match the contents of the package has exceeded a predetermined threshold value. With this configuration, a sender who tends to make inappropriate declarations can be extracted.

Although some embodiments of the present invention have been described, these embodiments are presented as examples and are not intended to limit the scope of the invention. These embodiments can be implemented in various other modes, and can be omitted, replaced, or modified in various manners without departing from the gist of the invention. These embodiments and modifications thereof are encompassed in the scope and gist of the invention, and are encompassed within the invention described in the claims and the equivalent thereof.

## Claims

1. A package inspection system comprising:
a data management portion (112) configured to generate and manage a data table (124) in which identification information regarding a package (P) is associated with recognized information regarding the package (P), based on first recognized information that includes at least the identification information regarding the package (P) that is a result of image recognition performed on an image of the package (P) captured by an image capture portion (50) and contents information indicating a sender of the package (P) and contents of the package (P), and on second recognized information that is input, regarding the image of the package (P), to any of one or more terminal apparatuses (70) to which the image of the package (P) captured by the image capture portion (50) has been sent, and to store a result of inspection of the package (P) in the data table (124); and
an alert portion (162, 164) configured to extract a sender of any package whose contents do not match the contents information indicating the contents of the package that is associated with the identification information in the data table (124) and accumulate an extraction history, and to cause an output portion (22, 200) to output information regarding any sender for whom the number of times or frequency that the contents information indicating the contents of the package did not match the contents of the package has exceeded a predetermined threshold value.

2. The package inspection system according to claim 1,
wherein the alert portion (162, 164) causes the output portion (22, 200) to output information in which the number of times or frequency that the contents information indicating the contents of the package did not match the contents of the package is associated with a corresponding sender for whom the number of times or frequency that the contents information indicating the contents of the package did not match the contents of the package has exceeded the predetermined threshold value.

3. The package inspection system according to claim 1 or 2,
wherein the result of inspection of the package (P) indicates a result of comparison between the contents information indicating the contents of the package (P) and contents of the package (P) that has been unpacked.

4. The package inspection system according to any one of claims 1 to 3,
wherein the output portion (22) accepts an operation to input, as the result of inspection, a determination result that indicates the result of comparison between the contents information indicating the contents of the package (P) and the contents of the package (P) that has been unpacked.

5. The package inspection system according to any one of claims 1 to 4,
wherein the output portion (200) accepts an operation to input, as the result of inspection, a determination result that indicates a result of comparison between the contents information indicating the contents of the package (P) and contents shown in a radiographic image of the package (P).

6. The package inspection system according to any one of claims 1 to 5, further comprising:
a radiographic apparatus configured to obtain a radiographic image of the package (P).

7. A package inspection program for causing a computer
to generate and manage a data table (124) in which identification information regarding a package (P) is associated with recognized information regarding the package (P), based on first recognized information that includes at least the identification information regarding the package (P) that is a result of image recognition performed on an image of the package (P) captured by an image capture portion (50) and contents information indicating a sender of the package (P) and contents of the package (P), and on second recognized information that is input, regarding the image of the package (P), to any of one or more terminal apparatuses to which the image of the package (P) captured by the image capture portion (50) has been sent, and to store a result of inspection of the package (P) in the data table (124); and
to extract a sender of any package whose contents do not match the contents information indicating the contents of the package that is associated with the identification information in the data table (124) and accumulate an extraction history, and to cause an output portion (22, 200) to output information regarding any sender for whom the number of times or frequency that the contents information indicating the contents of the package did not match the contents of the package has exceeded a predetermined threshold value.
